# EUROPEAN PATENT APPLICATION

(11) **EP 1 507 409 A1**
(43) Date of publication of application: **16.02.2005**
(21) Application number: 04708477.7
(22) Date of filing: 05.02.2004
(51) Int. Cl.: H04N 5/44, H04N 5/46

(54) **ANTENNA SWITCHING DEVICE AND METHOD THEREOF**

(30) Priority: 06.02.2003 JP 2003029205
(71) Applicant: MATSUSHITA ELECTRIC INDUSTRIAL CO., LTD., Kadoma-shi, Osaka 571-8501 (JP)
(72) Inventor: SASAKI, Shogo, Osaka 560-0085 (JP); MASUDA, Yasuo, Osaka 573-0045 (JP); KAWAKAMI, Tsuyoshi, Kobe-shi, Hyogo 658-0027 (JP); TESHIMA, Misao, Osaka 567-0041 (JP)
(74) Representative: Grünecker, Kinkeldey, Stockmair & Schwanhäusser Anwaltssozietät
(86) International application number: PCT/JP2004/001191
(87) International publication number: WO 2004/071080

(57) **Abstract**

An antenna switch apparatus and a switching method thereof including an antenna-input for cable broadcasting and an antenna-input for terrestrial broadcasting and satellite broadcasting, always receiving an OOB signal, and freely selecting one of a cable broadcasting channel and a terrestrial broadcasting channel or a satellite broadcasting channel is provided. In the antenna switch apparatus and the switching method, the terrestrial broadcasting signal is input to a select means, the cable broadcasting signal is split by a split means and the signals are input to an OOB tuner and the select means, then a signal selected by the select means is input to an A/D tuner. With this arrangement, one of the signal of the cable broadcasting channel and the terrestrial broadcasting channel or the satellite broadcasting is selected while keep receiving the OOB signal.

## Description

### TECHINICAL FIELD

The present invention relates to an antenna switch apparatus to be used for a television receiver, and a switching method thereof.

### BACKGROUND ART

Presently, broadcasting is classified into three categories: terrestrial broadcasting, satellite broadcasting and cable broadcasting; and there are a variety of modulation methods available for the broadcasting waves. Under such circumstances, an antenna switch apparatus having a plurality antenna input terminals is developed.

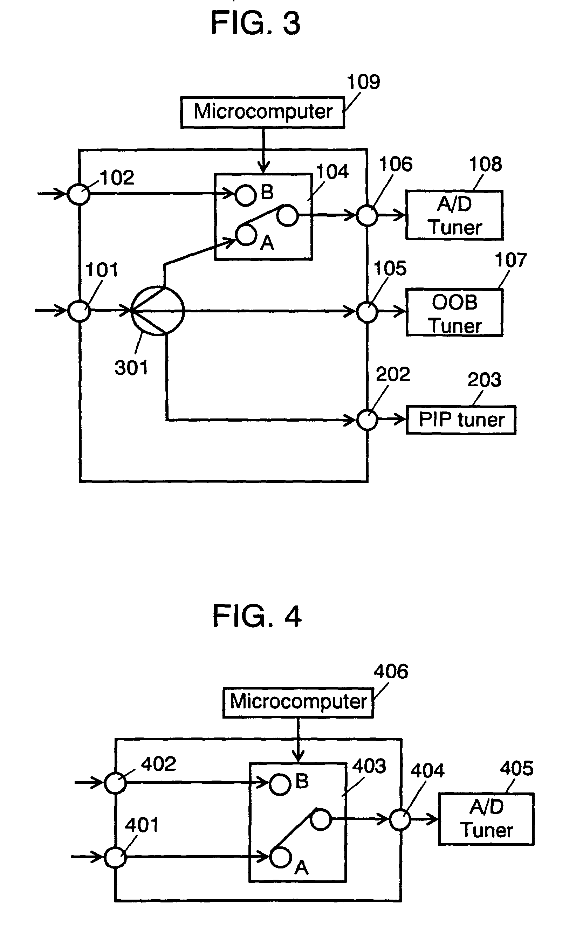

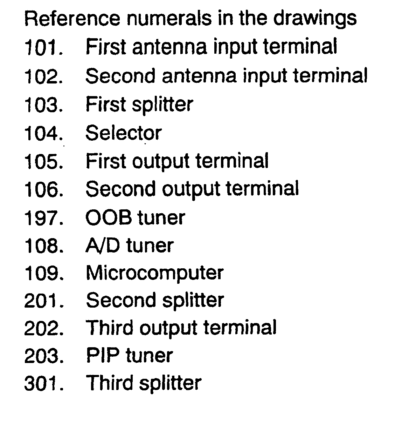

Fig. 4 shows a constitution of a conventional antenna switch apparatus. In Fig.4, a cable for a cable-broadcasting is connected to first antenna input terminal 401 and a cable for a terrestrial broadcasting is connected to second input terminal 402. If a subscriber selects a cable broadcasting channel, microcomputer 406 controls selector 403 to close to a point A, then the cable broadcasting signal is output to A/D tuner 405 through second output terminal 404. The A/D tuner is a tuner tuning an analog broadcasting as well as a digital broadcasting.

When a terrestrial broadcasting channel is selected, microcomputer 406 controls selector 403 to close to a point B, then the terrestrial broadcasting signal is output to the A/D tuner 405. In this way, selector 408 selects an input signal to be output to A/D tuner 405, and a desired channel is selected. This type of antenna switch apparatus is disclosed in Japanese Patent Laid-Open: H04-274683, for instance.

However, a problem exists in the conventional antenna switch apparatus; when the antenna switch apparatus is selecting a terrestrial broadcasting channel, the device can not receive an OOB (Out Of Band) signal which includes channel information of a cable broadcasting channel.

The antenna switch apparatus shown in Fig. 4 can not receive the OOB signal which includes channel information of the cable broadcasting channel when it is receiving a terrestrial broadcasting channel. When the cable broadcasting channel needs to be selected, selector 403 must be closed to the side of the cable broadcasting signal. A/D tuner 405 can not receive the OOB signal which includes the channel information without selector 403 being closed to the cable broadcasting signal side. A/D tuner 405 can not make a channel selection unless the channel information signal is decoded. However, A/D tuner 405 needs time to decode the channel information based on the OOB signal after selector 403 has been closed to the cable broadcasting signal side.

As described, in the conventional antenna switch apparatus shown in Fig.4, when a channel transition is made from a terrestrial broadcasting to a cable broadcasting, a certain period of time is required until the cable broadcasting channel is selected, and it is a large task of the conventional antenna switch apparatus.

### DISCLOSURE OF THE INVENTION

An antenna switch apparatus includes:
a first input means receiving a cable broadcasting signal;
a second input means receiving one of a terrestrial broadcasting signal and a satellite broadcasting signal;
a first split means splitting the cable broadcasting signal input by the first input means into a first cable broadcasting signal and a second cable broadcasting signal for outputting;
a select means selecting one of the terrestrial broadcasting signal and the satellite broadcasting signal input by the second input means, and the first cable broadcasting signal;
a first output means outputting one of the second cable broadcasting signal and an OOB signal extracted from the second cable broadcasting signal; and
a second output means outputting the signal selected by the select means.

A switching method of the antenna switch includes:
receiving a cable broadcasting signal;
receiving one of a terrestrial broadcasting signal and a satellite broadcasting signal;
splitting the received cable broadcasting signal into a first cable broadcasting signal and a second cable broadcasting for outputting;
selecting one of the received terrestrial broadcasting signal and satellite broadcasting signal, and the first cable broadcasting signal for outputting; and
outputting one of the second cable broadcasting signal and the OOB signal extracted from the second cable broadcasting signal.

### BRIEF DESCRIPTION OF THE DRAWINGS

Fig.1 is a block diagram showing a constitution of an antenna switch apparatus in accordance with a first exemplary embodiment of the present invention.
Fig.2 is a block diagram showing a constitution of an antenna switch apparatus in accordance with a second exemplary embodiment of the present invention.
Fig. 3 is a block diagram showing another constitution of an antenna switch apparatus in accordance with the second exemplary embodiment of the present invention.
Fig. 4 is a block diagram showing a constitution of a conventional antenna switch apparatus.

### DETAILED DESCRIPTION OF THE PREFERRED EMBODIMENTS

The invention is made to resolve the above conventional task, and to provide an antenna switch apparatus and a manufacturing method thereof, in which the antenna switch apparatus can always receive an OOB signal and can select any channel of terrestrial broadcasting, satellite broadcasting and cable broadcasting.

### (First exemplary embodiment)

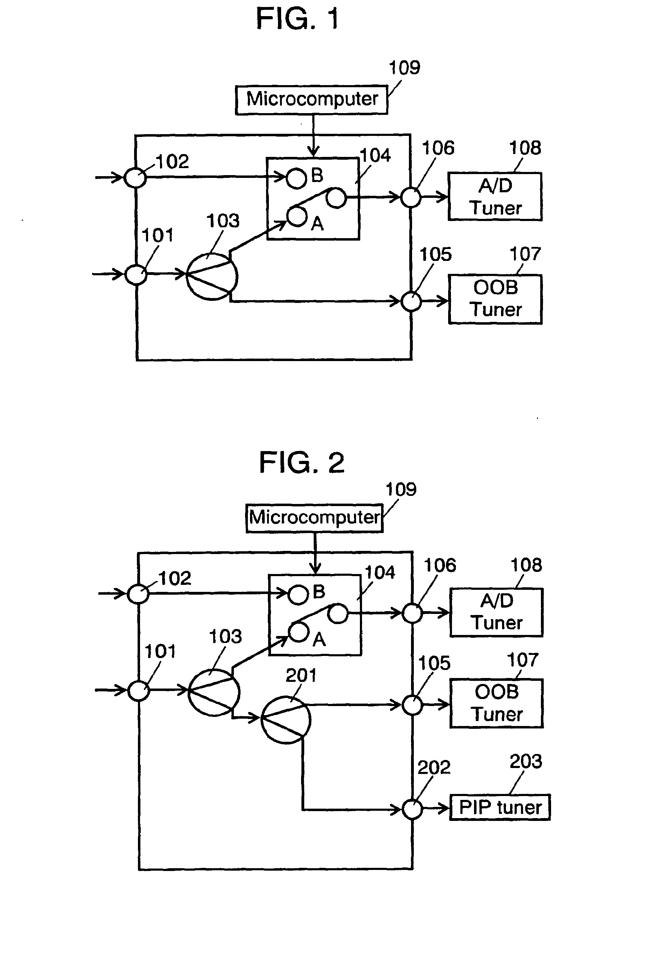

Fig. 1 is a block diagram showing a constitution of an antenna switch apparatus in accordance with a first exemplary embodiment of the present invention. A working principle of the antenna switch apparatus is explained hereinafter. In Fig.1, when an cable for a cable broadcasting is connected to first antenna input terminal 101 and an antenna for a terrestrial broadcasting is connected to second antenna input terminal 102, the cable broadcasting signal input to first antenna input terminal 101 is split into two signals at first splitter 103. The split signals are a first cable broadcasting signal and a second cable broadcasting signal. The first cable broadcasting signal is input to selector 104, and the second cable broadcasting signal is input to OOB (out of band) tuner 107 through first output terminal 105.

Along the cable broadcasting signal, an in-band signal and an OOB signal are multiplexed. Generally, in-band signal includes a picture signal and a sound signal, and the OOB signal includes coded key and channel information. First splitter 103 outputs the first cable broadcasting signal including both of in-band signal and OOB signal to selector 104, and the second cable broadcasting signal is output to first output terminal 105. With this setup, OOB tuner 107 always receives the OOB signal independent of closing status of selector 104.

The terrestrial broadcasting signal which is input to second antenna input terminal 102 is input to selector 104. Selector 104 selects one of the first cable broadcasting signal input through splitter 103 and the terrestrial broadcasting signal input through second antenna input terminal 102. Selector 104 outputs the selected signal to A/D tuner 108 through second output terminal 106. A/D tuner 108 is a tuner tuning both of analogue and digital broadcastings; as well as tuning the terrestrial broadcasting, the satellite broadcasting tuner and the cable broadcasting.

After a stage of first antenna input terminal 101, an amplifier and other circuits are placed when necessary. The amplifier and other circuit are not shown in Fig.1. First antenna input terminal 101 and the amplifier and other circuits constitute a first input means.

After a stage of second antenna input terminal 102, an amplifier and other circuits are placed when necessary. The amplifier and other circuit are not shown in Fig.1. First antenna input terminal 102 and an amplifier and other circuits constitute a second input means.

Before a stage of second output terminal 106, an amplifier and other circuits are placed when necessary. The amplifier and other circuits are not shown in Fig.1. Second output terminal 106 and the amplifier and other circuits constitute a second output means.

Before a stage of first output terminal 105, an OOB signal extractor, a filter, and an amplifier including other circuits are placed upon necessary. The OOB signal extractor is a circuit extracting the OOB signal out of the cable broadcasting signal. When the OOB signal extract circuit is placed, the output signal coming from first output terminal 105 is the OOB signal included in the second cable broadcasting signal. When the OOB signal extract circuit is not placed, the signal output from first output terminal 105 is all the second cable broadcasting signal including the in-band signal. The OOB signal extractor, the amplifier and other circuits are not shown in Fig.1. First output terminal 105, the OOB signal extractor, and the amplifier including other circuits constitute a first output means.

Before and after stages of selector 104, an amplifier and other circuits are placed when necessary. The amplifier and other circuits are not shown in Fig. 1. Selector 104 and the amplifier including other circuits constitute a select means.

Before and after stages of first splitter 103, an amplifier and other circuits are placed when necessary. The amplifier and other circuits are not shown in Fig. 1. Splitter 103 and the amplifier and other circuits constitute a first split means.

OOB tuner 107 can be a tuner specialized for processing the OOB signal, or it can be a tuner processing not only the OOB signal but also the picture signal and the sound signal. Channel information and key information decoded by OOB tuner 107 is input to A/D tuner 108 commanded by microcomputer 109.

When a subscriber selects a cable broadcasting channel, microcomputer 109 closes selector 104 to a point A, allowing the first cable broadcasting signal to be output to A/D tuner 108. Whereas, when a terrestrial broadcasting channel is selected, microcomputer 109 closes selector 104 to a point B allowing the terrestrial broadcasting signal to be output to A/D tuner 108.

Performance of the antenna switch apparatus at a time a subscriber
selecting a terrestrial broadcasting changes a selection to a cable broadcasting is explained next. When a terrestrial broadcasting signal is selected, the second cable broadcasting signal output from first splitter 103 is always input to OOB tuner 107 through first output terminal 105. In other words, even when a terrestrial broadcasting signal is selected, OOB tuner 107 is always receiving the second cable broadcasting signal or the OOB signal of the second cable broadcasting signal, so that the channel information and the key information are always decoded. Consequently, when channel transition is made from terrestrial broadcasting to cable broadcasting, A/D tuner 108 can instantly tune to the cable broadcasting channel based on the key and channel information restored by OOB tuner 107.

As described above, according to the exemplary embodiment of the present invention, the device can select any channel of a terrestrial broadcasting and a cable broadcasting while keep receiving an OOB signal.

### (Second exemplary embodiment)

Fig.2 is a block diagram showing a constitution of an antenna switch apparatus in accordance with a second exemplary embodiment of the present invention. As shown in Fig.2, the antenna switch apparatus according to the exemplary embodiment includes second splitter 201, third output terminal 202 and PIP tuner 203 in addition to constitutional members of the first exemplary embodiment. Each block identical to that of in Fig.1 has the same numeral and detailed explanation of it is omitted.

A second cable broadcasting signal output from first splitter 103 is input to second splitter 201. Second splitter 201 splits the second cable broadcasting signal and outputs a third cable broadcasting signal and a fourth cable broadcasting signal. The third cable broadcasting signal is output through first output terminal 105 to OOB tuner 107. The fourth cable broadcasting signal is output through third output terminal 202 to PIP tuner 203 making two picture displays possible. The PIP means 'picture in picture'. The 'picture in picture' is a function in which two different broadcasting pictures are displayed simultaneously on one screen. As a format of displaying two broadcasting pictures in one screen, shrinking one of the pictures and displaying it in another is generally known. In other words, one of the broadcasting pictures selected by A/D tuner 108 or PIP tuner 203 is shrunk and put in the other picture as a part of it.

When a subscriber is selecting a terrestrial broadcasting channel with A/D tuner 108, a cable broadcasting signal is always input to OOB tuner 107 and PIP tuner 203. By this reason, displaying both of the pictures of the terrestrial broadcasting and the cable broadcasting on one screen is made possible while always receiving an OOB signal. When a subscriber is selecting a cable broadcasting with A/D tuner 108, it is also possible to display another cable channel on the same screen while keep receiving the OOB signal.

Before a stage of third output terminal 202, an amplifier and other circuits are placed when necessary. The amplifier and other circuits are not shown in Fig.2. Third output terminal 202 and the amplifier including other circuits constitute a third output means.

Before and after a stage of splitter 201, an amplifier and other circuits are placed when necessary. The amplifier and other circuits are not shown in Fig.2. Second splitter 201 and the amplifier including other circuits constitute a second split means.

Next, another constitution according the second exemplary embodiment is explained with Fig. 3. Fig. 3 is a block diagram showing the other constitution of the second exemplary embodiment. In the constitution in Fig.3, second splitter 201 of Fig. 2 is not shown; third splitter 301 is placed instead of splitter 103 of Fig. 2. A block which is identical to that of in Fig.2 has the same numeral and detailed explanation of it is omitted.

As shown in Fig. 3, a cable broadcasting signal input to first antenna input terminal 101 is split into three signals by third splitter 301. The split three signals are the first cable broadcasting signal, the third cable broadcasting signal and the fourth cable broadcasting signal. The first cable broadcasting signal is input to selector 104. The third cable broadcasting signal is input to OOB tuner 107 through second output terminal 105. The fourth cable broadcasting signal is input to PIP tuner 203 through third output terminal 202.

Before and after stages of third splitter 301, an amplifier and other circuits are placed when necessary. The amplifier and other circuits are not listed in Fig.3. Third splitter 301 and the amplifier including other circuits constitute a third split means.

It goes without saying that an identical effect is obtained by the constitution in Fig. 3 as that of the constitution in Fig. 2.

In the first exemplary embodiment and the second exemplary embodiment, the antenna connected to input terminal 102 is a terrestrial broadcasting antenna, but it can be a satellite broadcasting antenna. In the second exemplary embodiment, PIP tuner 203 can also be used as a back channel recording tuner.

As demonstrated in above, the antenna switch apparatus according to the present invention splits the input cable broadcasting signal and always inputs one of the split signal to the OOB tuner. By doing so, the antenna switch apparatus can select any channel out of the terrestrial broadcasting, the satellite broadcasting and the cable broadcasting while keep receiving the OOB signal a any time.

### INDUSTRIAL APPLICABILITY

According to an antenna switch apparatus and a switching method of the present invention, when a terrestrial broadcasting channel or a satellite broadcasting channel is selected, an OOB signal of a cable broadcasting signal is always received. Because of the feature, a cable broadcasting channel can be instantly selected even in a state where a terrestrial broadcasting channel or a satellite broadcasting channel is selected.

## Claims

1. An antenna switch apparatus comprising:
a first input means receiving a cable broadcasting signal;
a second input means receiving one of a terrestrial broadcasting signal and a satellite broadcasting signal;
a first split means splitting the cable broadcasting signal input by the first input means into a first cable broadcasting signal and a second cable broadcasting signal for outputting;
a select means selecting one of the terrestrial broadcasting signal and the satellite broadcasting signal input by the second input means, and the first cable broadcasting signal;
a first output means outputting one of the second cable broadcasting signal and an OOB signal extracted from the second cable broadcasting signal; and
a second output means outputting a signal selected by the select means.

2. The antenna switch apparatus of claim 1 further comprising:
a second split means splitting the second cable broadcasting signal into a third cable broadcasting signal and a fourth cable broadcasting signal for outputting; and
a third output means outputting the fourth cable broadcasting signal,
wherein the first output means outputting one of the third cable broadcasting signal and the OOB signal extracted from the third cable broadcasting signal.

3. The antenna switch apparatus of claim 1 further comprising:
a fourth output means,
wherein the first split means splitting the cable broadcasting signal input by first input means into the first cable broadcasting signal, a third cable broadcasting signal and a fourth cable broadcasting signal for outputting,
wherein the fist output means outputting one of the third cable broadcasting signal and the OOB signal extracted from the third cable broadcasting signal,
wherein the fourth output means outputting the fourth cable broadcasting signal.

4. A switching method of an antenna switch comprising:
receiving a cable broadcasting signal;
receiving one of a terrestrial broadcasting signal and a satellite broadcasting signal;
splitting the received cable broadcasting signal into a first cable broadcasting signal and a second cable broadcasting for outputting;
selecting one of the received terrestrial broadcasting signal and satellite broadcasting signal, and the first cable broadcasting signal for outputting; and
outputting one of the second cable broadcasting signal and the OOB signal extracted from the second cable broadcasting signal.

5. A switching method of an antenna switch comprising:
receiving a cable broadcasting signal;
receiving one of a terrestrial broadcasting signal and a satellite broadcasting signal;
splitting the received cable broadcasting signal into a first cable broadcasting signal and a second cable broadcasting for outputting;
splitting the second cable broadcasting signal into a third cable broadcasting signal and a fourth cable broadcasting signal for outputting;
selecting one of the received terrestrial broadcasting signal and satellite broadcasting signal, and the first cable broadcasting signal for outputting;
outputting one of the third cable broadcasting signal and the OOB signal extracted from the third cable broadcasting signal; and
outputting the fourth cable broadcasting signal.

6. A switching method of an antenna switch comprising:
receiving a cable broadcasting signal;
receiving one of a terrestrial broadcasting signal and a satellite broadcasting signal;
splitting the received cable broadcasting signal into a first cable broadcasting signal, a third cable broadcasting and a fourth cable broad casting for outputting;
selecting one of the received terrestrial broadcasting signal and satellite broadcasting signal, and the first cable broadcasting signal for outputting;
outputting the third cable broadcasting signal or the OOB signal extracted form the third cable broadcasting signal; and
outputting the fourth cable broadcasting signal.
